(19) Europäisches Patentamt
European Patent Office
Office européen des brevets

(11) EP 4 597 361 A1

(12) **EUROPEAN PATENT APPLICATION**

(43) Date of publication:
06.08.2025 Bulletin 2025/32

(21) Application number: 24214165.3

(22) Date of filing: 20.11.2024

(51) International Patent Classification (IPC):
G06N 3/02 (2006.01)          F04D 15/00 (2006.01)
G06N 3/08 (2023.01)

(52) Cooperative Patent Classification (CPC):
F04D 15/0088; F04D 15/0066; G06N 3/02;
G06N 3/08; F05D 2270/709

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.01.2024 CN 202410122158

(71) Applicant: Hefei Xinhu Canned Motor Pump Co.,
Ltd.
Anhui Province 230088 (CN)

(72) Inventors:
• HAN, Zongmei
  Hefei, 230088 (CN)
• LI, Wenpeng
  Hefei, 230088 (CN)
• WU, Jing
  Hefei, 230088 (CN)

(74) Representative: Dennemeyer & Associates S.A.
Postfach 70 04 25
81304 München (DE)

(54) **A COMPUTER-IMPLEMENTED METHOD AND SYSTEM FOR DETERMINING A FLUID FLOW RATE OF A WATER PUMP**

(57) The embodiments of the present invention relate to a computer-implemented method and system for determining a fluid flow rate of a water pump, wherein the method comprises: determining a flow rate expression characteristic based on revolutions per minute and power according to a flow rate of the water pump under multiple sets of revolutions per minute and powers based on a neural network model through a computer device; wherein, the flow rate expression characteristic comprises an expression term characteristic and a coefficient characteristic corresponding thereto; introducing the flow rate expression characteristic into a water pump control system through the computer device; determining an expression term characteristic value corresponding to the current power and current revolutions per minute of the water pump according to the expression term characteristic through the water pump control system; and determining a current flow rate of the water pump according to the expression term characteristic value and the coefficient characteristic through the water pump control system. The embodiments of the present invention achieve a reduction in the computing load of the MCU in the water pump control system, and an improvement in the calculation accuracy of the flow rate simultaneously.

## Description

## CROSS-REFERENCE TO RELATED APPLICATIONS

This application claims the full benefit of and priority to Chinese Application Number 202410122158X filed on January 30, 2024.

## Technical Field

The present invention relates to the technical field of water pumps, in particular to a computer-implemented method and system for determining a fluid flow rate of a water pump.

## Background Art

There are existing methods for calculating a fluid flow rate of a water pump adopting look-up table method, which have certain requirements for the storage size of a Micro Control Unit (MCU) in a water pump control system. There are also methods for calculating the fluid flow rate in a water pump body based on a recursive algorithm of a neural network model, but the arrangement of the neural network model on the MCU side requires high computing power of the MCU, which will increase the cost of the water pump.

In the existing methods for calculating the fluid flow rate of the water pump, the look-up table method needs to occupy the storage space of the MCU, and the calculation is not accurate enough, while the neural network model has a large amount of calculation and has high requirements for the MCU.

## Summary of the Invention

The invention provides a computer-implemented method and system for determining a fluid flow rate of a water pump, with an objective of reducing the computing load of MCU in a water pump control system, and improving the calculation accuracy of flow rate simultaneously.

In a first aspect, the embodiment of the present invention provides a computer-implemented method for determining a fluid flow rate of a water pump, comprising:

determining a flow rate expression characteristic based on revolutions per minute and power according to a flow rate of the water pump under multiple sets of revolutions per minute and power based on a neural network model through a computer device; wherein, the flow rate expression characteristic comprises an expression term characteristic and a coefficient characteristic corresponding thereto; introducing the flow rate expression characteristic into a water pump control system through the computer device; determining an expression term characteristic value corresponding to a current power and a current revolutions per minute of the water pump according to the expression term characteristic through the water pump control system; and determining a current flow rate of the water pump according to the expression term characteristic value and the coefficient characteristic through the water pump control system.

In a second aspect, the embodiment of the present invention provides a system for determining a fluid flow rate of a water pump, comprising:

a computer device and a water pump control system, both of which include a processor and a storage device in which programs are stored; the programs of the computer device cause the computer device to execute the corresponding steps executed by the computer device in the method for determining of the fluid flow rate of the water pump provided in any embodiment of the present invention; and the programs of the water pump control system cause the water pump control system to execute the corresponding steps executed by the water pump control system in the method for determining of the fluid flow rate of the water pump provided in any embodiment of the present invention.

The embodiments of the present invention provide a computer-implemented method and system for determining a fluid flow rate of a water pump, after preprocessing the relevant operation data of the water pump through a computer device, the flow rate expression characteristic is obtained and introduced into the water pump control system, and the flow rate is calculated by the water pump control system by utilizing the flow rate expression characteristic, which solves the problems that the look-up table method adopted in the water pump control system in the prior art occupies the storage space and the calculation is not accurate enough, and that the computing load in the neural network algorithm is larger and the MCU cost is higher, achieving a reduction in the computing load of the MCU in the water pump control system and an improvement in the calculation accuracy of the flow rate simultaneously.

## Brief Description of the Drawings

Figure 1 is a flowchart of a computer-implemented method for determining a fluid flow rate of a water pump provided in Embodiment 1 of the present invention.
Figure 2 is a schematic diagram of the structure of a system for determining a fluid flow rate of a water pump provided in Embodiment 2 of the present invention.

## Detailed Description of the Invention

The present invention is further described in detail below in combination with the drawings and embodiments. It is understood that the specific embodiments described herein are only for the purpose of explaining the present invention and not for limiting the present invention. It is also necessary to note that, for the sake of description, only part but not all of the structures related to the present invention are shown in the drawings.

## Embodiment 1

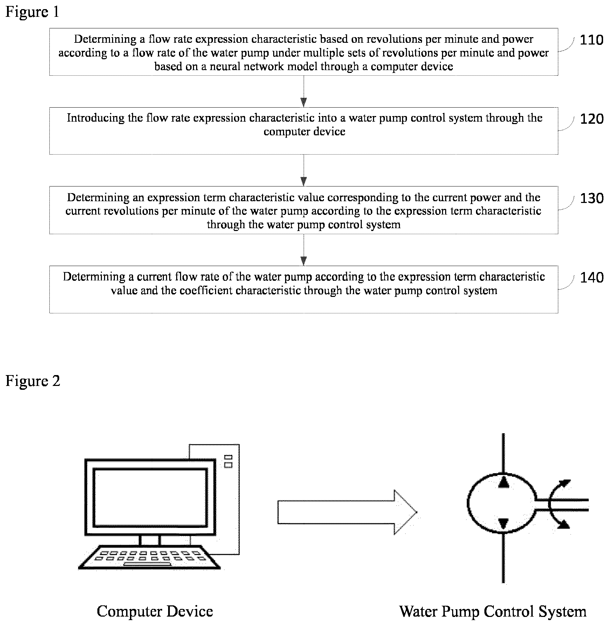

Figure 1 is a flowchart of a computer-implemented method for determining a fluid flow rate of a water pump provided in Embodiment1 of the present invention. The present embodiment can be applied to the situation that the current flow rate is calculated by a water pump control system in the operation of the water pump, the method can be carried out by the system for determining a fluid flow rate of a water pump, and a computer device and the water pump control system are connected by signals in the system. The method specifically comprises:

Step 110, determining a flow rate expression characteristic based on revolutions per minute and power according to a flow rate of the water pump under multiple sets of revolutions per minute and power based on a neural network model through a computer device.

Wherein, the flow rate of the water pump under multiple sets of revolutions per minute and power may be obtained by pre-operating the water pump and then actually measuring it, and then is stored through the computer device, and the data can be stored in the form of tables and the like, for example, each table puts the revolutions per minute, the power and the flow rate of the same set in the same row, and each set of data is placed in different rows. The computer device utilizes the stored flow rates under multiple sets of revolutions per minute and power, based on the iterative operation of the neural network model, obtains the characteristics between both of the revolutions per minute and the powers and the flow rate corresponding to them, and determines the flow rate expression characteristic based on the revolutions per minute and the power. The flow rate expression characteristic comprises an expression term characteristic and a coefficient characteristic corresponding thereto. The expression term characteristic is the N-order term of the revolutions per minute and the power, and the coefficient characteristic is a coefficient value corresponding to the expression term characteristic one to one.

Step 120, introducing the flow rate expression characteristic into a water pump control system through the computer device.

Wherein, the computer device and the water pump control system are connected by signal, and the flow rate expression characteristic is induced into the water pump control system, so that when the water pump is operating, the calculation of flow rate can be completed through the water pump control system alone. The water pump control system comprises an MCU and connected sensors that retrieve bus voltage, current, revolutions per minute, temperature, and other data. Only the flow rate expression characteristic needs to be stored in the water pump control system, which occupies little storage space.

Step 130, determining an expression term characteristic value corresponding to the current power and current revolutions per minute of the water pump according to the expression term characteristic through the water pump control system.

Wherein, the corresponding expression term characteristic value is calculated by the current power and current revolutions per minute obtained by the water pump control system according to the expression term characteristic.

Step 140, determining a current flow rate of the water pump according to the expression term characteristic value and the coefficient characteristic through the water pump control system.

Wherein, the coefficient characteristic and the corresponding expression term characteristic value stored in the water pump control system are multiplied and summed to obtain the current flow rate of the water pump. The amount of calculation of MCU of the water pump control system in the solution of the present embodiment is also small, which is conducive to improving the performance of the real-time calculation of flow rate.

In the technical solution of the present embodiment, after preprocessing the relevant operation data of the water pump through computer device, the flow rate expression characteristic is obtained and introduced into the water pump control system, and the flow rate is calculated by the water pump control system by utilizing the flow rate expression characteristic, which solves the problems that the look-up table method adopted in the water pump control system in the prior art occupies the storage space and the calculation is not accurate enough, and that the computing load in the neural network algorithm is larger and the MCU cost is higher, achieving a reduction in the computing load of the MCU in the water pump control system and an improvement in the calculation accuracy of the flow rate simultaneously.

On the basis of the above-mentioned technical solutions, in one implementation, determining the flow rate expression characteristic based on revolutions per minute and power according to a flow rate of the water pump under multiple sets of revolutions per minute and power through a computer device based on a neural network model may comprise:

carrying out an N-order polynomial ascending dimension on the revolutions per minute $R$pm and the power P according to the data of multiple sets of revolutions per minute and power based on a neural network model through the computer device, and setting a flow rate formula $\hat{F} = \Theta_1 * \delta_1 + \Theta_2 * \delta 2 + \Theta_3 * \delta_3 ...$, wherein, $\Theta_1$, $\Theta_2$, $\Theta_3$ ... are the expression term characteristic, and $\delta_1$, $\delta_2$, $\delta_3$ ... are the coefficient characteristic;

adjusting the polynomial order N by the neural network model, carrying out iterative calculation such

$$\sum_{i=1}^{m} \left( F_i - \hat{F}_i \right)^2$$

that                    converges, to obtain the expression term characteristic and the coefficient characteristic; wherein, $F_i$ is the flow rate, and $\hat{F}_i$ is a flow rate calculation value corresponding to the $F_i$.

Wherein, the computer device has stronger computing capability than that of the MCU of the water pump control system, and the computer device utilizes the collected water pump data (power, revolutions per minute, flow rate, etc.) to introduce them into the computer device for iterative calculation to determine the flow rate expression characteristics.

On the basis of the above-mentioned technical solutions, in one implementation, before determining the flow rate expression characteristic based on revolutions per minute and power according to the flow rate of the water pump under multiple sets of revolutions per minute and power through a computer device based on a neural network model, it further comprises:

obtaining multiple sets of the revolutions per minute ($Rpm_1$, $Rpm_2$, $Rpm_3$ ...), the power ($P_1$, $P_2$, $P_3$ ...) and the flow rate ($F_1$, $F_2$, $F_3$ ...) of the water pump collected by utilizing a water pump performance test bench through the computer device, to form sampled data. Wherein, the water pump performance test bench can be used to collect the data of the water pump. The water pump performance test bench is a kind of test equipment for testing the operation state of the water pump, which can provide power supply for the water pump, provide water transmission line, and detect the operation data of the water pump (power, revolutions per minute, flow rate, etc.) and transmit them to the computer device. Typically, for the accuracy of the calculation of flow rate, the amount of data sampling combination should be larger, since the computer device is used to pre-process the sampled data of water pump, the real-time calculation of flow rate of the water pump may not be affected by the problems related to computing capability and computing time. Moreover, the range of the revolutions per minute and the power most commonly used by the water pump in the work can be considered, and the sampling quantity can be increased for the revolutions per minute range and the power range that are used frequently, so that the flow rate expression characteristics are more in line with the mapping relationship between both of the revolutions per minute and the power and the flow rate in the work of the water pump.

On the basis of the above-mentioned technical solutions, in one implementation, collecting multiple sets of the revolutions per minute, the power and the flow rate of the water pump by utilizing the water pump performance test bench, to form sampled data comprises:

changing the flow rate by fixing valve opening and changing revolutions per minute; wherein, the valve opening is set to equal parts of n1, n2, n3..., and the revolutions per minute of the water pump are set to equal parts of r1, r2, r3...;

opening the valve opening to n1, n2, n3... in sequence, and adjusting the revolutions per minute to r1, r2, r3... in sequence at each value opening, and recording the current revolutions per minute, the power and the flow rate of the water pump after each adjustment of the revolutions per minute; and

saving the recorded data as a table to form sampled data.

Wherein, the valve is a controllable valve installed on the water transmission line of the water pump.

On the basis of the above-mentioned technical solutions, in one implementation, determining an expression term characteristic value corresponding to the current power and current revolutions per minute of the water pump according to the expression term characteristic through the water pump control system comprises:

obtaining the expression term characteristic value ($\beta_1$, $\beta_2$, $\beta_3$ ...) of each expression term characteristic according to the current revolutions per minute and current power of the water pump by utilizing the expression term characteristic through the water pump control system.

Wherein, the current revolutions per minute and current power of the water pump are substituted into each expression term characteristic, and then the expression term characteristic value of each expression term characteristic under the current revolutions per minute and current power is obtained.

On the basis of the above-mentioned technical solutions, in one implementation, determining the current flow rate of the water pump according to the expression term characteristic value and the coefficient characteristic through the water pump control system comprises:

calculating the current flow rate of the water pump by utilizing the flow rate calculation formula: $F_i = \Sigma(\delta_i * \beta_i)$ through the water pump control system, wherein $\delta_i$ is the coefficient characteristic and $\beta_i$ is the corresponding expression term characteristic value.

Wherein, the coefficient characteristics ($\delta_1$, $\delta_2$, $\delta_3$ ...) obtained through the computer device are introduced into the MCU of the water pump to calculate the flow rate F, in order to reduce the calculation amount of MCU, such that using a lower-cost MCU can achieve a higher precision in the calculation of flow rate.

## Embodiment 2

Figure. 2 is a schematic diagram of the structure of a system for determining a fluid flow rate of a water pump provided in Embodiment 2 of the present invention. As shown in Figure 2, the system for determining a fluid flow rate of a water pump comprises:

a computer device and a water pump control system, both of which include a processor and a storage device in which programs are stored;

the programs of the computer device cause the computer device to execute the following:

determining a flow rate expression characteristic based on revolutions per minute and power according to a flow rate of the water pump under multiple sets of revolutions per minute and power based on a neural network model, wherein, the flow rate expression characteristic comprises an expression term characteristic and a coefficient characteristic corresponding thereto; and

introducing the flow rate expression characteristic into the water pump control system;

the programs of the water pump control system cause the water pump control system to execute the following:

determining an expression term characteristic value corresponding to a current power and a current revolutions per minute of the water pump according to the expression term characteristic through the water pump control system; and determining a current flow rate of the water pump according to the expression term characteristic value and the coefficient characteristic through the water pump control system.

On the basis of the above-mentioned technical solutions, in one implementation the programs of the computer device causing the computer device to execute: determining a flow rate expression characteristic based on revolutions per minute and power according to a flow rate of the water pump under multiple sets of revolutions per minute and power based on a neural network model comprises:

carrying out an N-order polynomial ascending dimension on revolutions per minute $R$pm and power $P$ according to the data of multiple sets of revolutions per minute and power based on a neural network model, and setting a flow rate formula $\hat{F} = \Theta_1 * \delta_1 + \Theta_2 * \delta_2 + \Theta_3 * \delta_3...$ , wherein, $\Theta_1, \Theta_2, \Theta_3 ...$ are the expression term characteristic, and $\delta_1, \delta_2, \delta_3 ...$ are the coefficient characteristic;

adjusting the polynomial order N by the neural network model, carrying out iterative calculation such

$$\sum_{i=1}^{m} \left( F_i - \hat{F}_i \right)^2$$

that converges, to obtain the expression term characteristic and the coefficient characteristic; wherein, $F_i$ is the flow rate, and $\hat{F}_l$ is a flow rate calculation value corresponding to the $F_i$.

On the basis of the above-mentioned technical solutions, in one implementation, before the programs of the computer device cause the computer device to execute: determining a flow rate expression characteristic based on revolutions per minute and power according to the flow rate of the water pump under multiple sets of revolutions per minute and power based on a neural network model, it further comprises:

obtaining multiple sets of the revolutions per minute ($R$pm$_1$, $R$pm$_2$, $R$pm$_3$... ), the power (P$_1$, P$_2$, P$_3$ ...) and the flow rate (F$_1$, F$_2$, F$_3$...) of the water pump collected by utilizing a water pump performance test bench, to form sampled data.

On the basis of the above-mentioned technical solutions, in one implementation, collecting multiple sets of the revolutions per minute, the power and the flow rate of the water pump by utilizing the water pump performance test bench, to form sampled data comprises:

changing the flow rate by fixing valve opening and changing revolutions per minute; wherein, the valve opening is set to equal parts of n1, n2, n3..., and the revolutions per minute of the water pump are set to equal parts of r1, r2, r3...;

opening the valve opening to n1, n2, n3... in sequence, and adjusting the revolutions per minute to r1, r2, r3... in sequence at each value opening, and recording the current revolutions per minute, the power and the flow rate of the water pump after each adjustment of the revolutions per minute; and

saving the recorded data as a table to form the sampled data.

On the basis of the above-mentioned technical solutions, in one implementation, determining an expression term characteristic value corresponding to the current power and current revolutions per minute of the water pump according to the expression term characteristic through the water pump control system comprises: obtaining the expression term characteristic value ($\beta_1$, $\beta_2$, $\beta_3$...) of each expression term characteristic according to the current revolutions per minute and current power of the water pump by utilizing the expression term characteristic through the water pump control system.

On the basis of the above-mentioned technical solutions, in one implementation, determining the current flow rate of the water pump according to the expression term characteristic value and the coefficient characteristic through the water pump control system comprises:

calculating the current flow rate of the water pump by utilizing the flow rate calculation formula: $F_i = \Sigma(\delta_i * \beta_i)$ through the water pump control system, wherein $\delta_i$ is the coefficient characteristic and $\beta_i$ is the corresponding expression term characteristic value.

The system for the determination of the fluid flow rate of a water pump provided in the embodiment of the present invention can execute the method for the determination of the fluid flow rate of a water pump provided by any embodiment of the present invention and has the corresponding functional module and beneficial effect of the execution method.

Although the present invention has been described in detail with general description, specific embodiments and tests, on the basis of the present invention, some modifications or improvements can be made, which are clear to those skilled in the art.

**Claims**

1. A computer-implemented method for determining a fluid flow rate of a water pump, comprising:

   determining a flow rate expression characteristic based on revolutions per minute and power according to a flow rate of the water pump under multiple sets of revolutions per minute and powers based on a neural network model through a computer device; wherein, the flow rate expression characteristic comprises an expression term characteristic and a coefficient characteristic corresponding thereto;
   introducing the flow rate expression characteristic into a water pump control system through the computer device;
   determining an expression term characteristic value corresponding to a current power and a current revolutions per minute of the water pump according to the expression term characteristic through the water pump control system; and
   determining a current flow rate of the water pump according to the expression term characteristic value and the coefficient characteristic through the water pump control system.

2. The method according to claim 1, wherein said determining the flow rate expression characteristic based on revolutions per minute and power according to the flow rate of the water pump under multiple sets of revolutions per minute and power through the computer device based on the neural network model comprises:

   carrying out an N-order polynomial ascending dimension on the revolutions per minute $Rpm$ and the power P according to the data of multiple sets of revolutions per minute and power based on the neural network model through the computer device, and setting a flow rate formula $\hat{F} = \Theta_1 * \delta_1 + \Theta_2 * \delta_2 + \Theta_3 * \delta_3...$, wherein, $\Theta_1, \Theta_2, \Theta_3...$ are the expression term characteristic, and $\delta_1, \delta_2, \delta_3 ...$ are the coefficient characteristic;
adjusting the polynomial order N by the neural network model, carrying out iterative calculation

$$\sum_{i=1}^{m} \left( F_i - \hat{F}_i \right)^2$$

such that converges, to obtain the expression term characteristic and the coefficient characteristic; wherein, $F_i$ is the flow rate, and $\hat{F}_i$ is a flow rate calculation value corresponding to the $F_i$.

3. The method according to claim 2, wherein before said determining the flow rate expression characteristic based on revolutions per minute and power according to the flow rate of the water pump under multiple sets of revolutions per minute and power through the computer device based on the neural network model, it further comprises:
   obtaining multiple sets of the revolutions per minute $(Rpm_1, Rpm_2, Rpm_3...)$, the power $(P_1, P_2, P_3...)$ and the flow rate $(F_1, F_2, F_3 ...)$ of the water pump collected by utilizing a water pump performance test bench through the computer device, to form sampled data.

4. The method according to claim 3, wherein collecting multiple sets of the revolutions per minute, the power and the flow rate of the water pump by utilizing the water pump performance test bench, to form sampled data, comprises:

   changing the flow rate by fixing valve opening and changing revolutions per minute; wherein, the valve opening is set to equal parts of n1, n2, n3..., and the revolutions per minute of the water pump is set to equal parts of r1, r2, r3...;
   opening the valve opening to n1, n2, n3... in sequence, and adjusting the revolutions per minute to r1, r2, r3... in sequence at each value opening, and recording the current revolutions per minute, the power and the flow rate of the water pump after each adjustment of the revolutions per minute; and
   saving the recorded data as a table to form the sampled data.

5. The method according to claim 1, wherein said determining an expression term characteristic value corresponding to a current power and a current revolutions per minute of the water pump according to the expression term characteristic through the water pump control system comprises:
   obtaining the expression term characteristic value

$(\beta_1, \beta_2, \beta_3 ...)$ of each expression term characteristic according to the current revolutions per minute and current power of the water pump by utilizing the expression term characteristic through the water pump control system.

6. The method according to claim 5, wherein said determining the current flow rate of the water pump according to the expression term characteristic value and the coefficient characteristic through the water pump control system, comprising:
calculating the current flow rate of the water pump by utilizing the flow rate calculation formula: $F_i = \Sigma(\delta_i * \beta_i)$ through the water pump control system, wherein $\delta_i$ is the coefficient characteristic and $\beta_i$ is the corresponding expression term characteristic value.

7. A system for determining a fluid flow rate of a water pump, comprising:

a computer device and a water pump control system, both of which include a processor and a storage device in which programs are stored; the programs of the computer device cause the computer device to execute the following:

determining a flow rate expression characteristic based on revolutions per minute and power according to a flow rate of the water pump under multiple sets of revolutions per minute and powers based on a neural network model, wherein, the flow rate expression characteristic comprises an expression term characteristic and a coefficient characteristic corresponding thereto; and introducing the flow rate expression characteristic into the water pump control system;

the programs of the water pump control system cause the water pump control system to execute the following:

determining an expression term characteristic value corresponding to a current power and a current revolutions per minute of the water pump according to the expression term characteristic through the water pump control system; and determining a current flow rate of the water pump according to the expression term characteristic value and the coefficient characteristic through the water pump control system.

8. The system according to claim 7, wherein the programs of the computer device causing the computer device to execute: determining a flow rate expression characteristic based on revolutions per minute and power according to a flow rate of the water pump under multiple sets of the revolutions per minute and the power based on the neural network model comprises:

carrying out an N-order polynomial ascending dimension on revolutions per minute $R$pm and power P according to the data of multiple sets of revolutions per minute and power based on the neural network model, and setting a flow rate formula $\hat{F} = \Theta_1 * \delta_1 + \Theta_2 * \delta_2 + \Theta_3 * \delta_3 ...$, wherein, $\Theta_1, \Theta_2, \Theta_3 ...$ are the expression term characteristic, and $\delta_1, \delta_2, \delta_3 ...$ are the coefficient characteristic;
adjusting the polynomial order N by the neural network model, carrying out iterative calculation such that $\sum_{i=1}^{m} \left( F_i - \hat{F}_i \right)^2$ converges, to obtain the expression term characteristic and the coefficient characteristic; wherein, $F_i$ is the flow rate, and $\hat{F}_i$ is a flow rate calculation value corresponding to the $F_i$.

9. The system according to claim 8, wherein before the programs of the computer device cause the computer device to execute: determining a flow rate expression characteristic based on revolutions per minute and power according to the flow rate of the water pump under multiple sets of the revolutions per minute and the power based on the neural network model, it further comprises:
obtaining multiple sets of the revolutions per minute $(R$pm$_1, R$pm$_2, R$pm$_3 ...)$, the power $(P_1, P_2, P_3 ...)$ and the flow rate $(F_1, F_2, F_3 ...)$ of the water pump collected by utilizing a water pump performance test bench, to form sampled data.

10. The system according to claim 9, wherein collecting multiple sets of the revolutions per minute, the power and the flow rate of the water pump by utilizing the water pump performance test bench, to form sampled data, comprising:

changing the flow rate by fixing valve opening and changing revolutions per minute; wherein, the valve opening is set to equal parts of n1, n2, n3..., and the revolutions per minute of the water pump is set to equal parts of r1, r2, r3...;
opening the valve opening to n1, n2, n3... in sequence, and adjusting the revolutions per minute to r1, r2, r3... in sequence at each value opening, and recording the current revolutions per minute, the power and the flow rate of the water pump after each adjustment of revolutions per minute; and

**EP 4 597 361 A1**

saving the recorded data as a table to form the sampled data.

Figure 1

| Determining a flow rate expression characteristic based on revolutions per minute and power according to a flow rate of the water pump under multiple sets of revolutions per minute and power based on a neural network model through a computer device | 110 |

↓

| Introducing the flow rate expression characteristic into a water pump control system through the computer device | 120 |

↓

| Determining an expression term characteristic value corresponding to the current power and the current revolutions per minute of the water pump according to the expression term characteristic through the water pump control system | 130 |

↓

| Determining a current flow rate of the water pump according to the expression term characteristic value and the coefficient characteristic through the water pump control system | 140 |

Figure 2

Computer Device                    Water Pump Control System

Europäisches
Patentamt

European
Patent Office

Office européen
des brevets

# EUROPEAN SEARCH REPORT

Application Number

EP 24 21 4165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 109 859 A (CHINESE METERING UNIV) 1 March 2022 (2022-03-01) <br> * paragraph [0006] - paragraph [0031] * <br> * abstract * | 1-10 | INV. <br> G06N3/02 <br> F04D15/00 <br> G06N3/08 |
| X | CN 105 550 447 B (UNIV BOHAI) 14 June 2019 (2019-06-14) <br> * paragraph [0002] - paragraph [0027] * <br> * abstract * | 1-10 | |
| A | CN 113 901 710 A (UNIV JILIANG CHINA) 7 January 2022 (2022-01-07) <br> * paragraph [0004] - paragraph [0096] * <br> * abstract * | 1-10 | |
| A | CN 114 046 259 A (LEO GROUP ZHEJIANG PUMP CO LTD) 15 February 2022 (2022-02-15) <br> * paragraph [0040] - paragraph [0075] * <br> * abstract * | 1-10 | |
| A | CN 112 816 002 A (GRUNDFOS HOLDING AS) 18 May 2021 (2021-05-18) <br> * paragraph [0046] - paragraph [0102]; figures 1-5 * <br> * abstract * | 1-10 | TECHNICAL FIELDS SEARCHED (IPC) <br><br> G06N <br> F04D |

The present search report has been drawn up for all claims

| Place of search | Date of completion of the search | Examiner |
|---|---|---|
| The Hague | 7 April 2025 | Hermens, Sjoerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 4165

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2025

| Patent document cited in search report | | Publication date | Patent family member(s) | | Publication date |
|---|---|---|---|---|---|
| CN 114109859 | A | 01-03-2022 | NONE | | |
| CN 105550447 | B | 14-06-2019 | NONE | | |
| CN 113901710 | A | 07-01-2022 | NONE | | |
| CN 114046259 | A | 15-02-2022 | NONE | | |
| CN 112816002 | A | 18-05-2021 | CN | 112816002 A | 18-05-2021 |
| | | | EP | 3822489 A1 | 19-05-2021 |
| | | | US | 2021148739 A1 | 20-05-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410122158X